# EUROPÄISCHE PATENTSCHRIFT

(11) **EP 0 491 319 B1**
(45) Veröffentlichungstag und Bekanntmachung des Hinweises auf die Patenterteilung: **15.03.1995**
(21) Anmeldenummer: 91121511.9
(22) Anmeldetag: 16.12.1991
(51) Int. Cl.: H02G 3/12, H02G 3/18

(54) **Elektrisches Unterputz-Installationsgerät**
Flush-mounted electrical apparatus
Appareil électrique encastrable

(30) Priorität: 18.12.1990 DE 4040473
(43) Veröffentlichungstag der Anmeldung: 24.06.1992
(73) Patentinhaber: ABB PATENT GmbH, 68309 Mannheim (DE)
(72) Erfinder: Mittler, Leo, W-5882 Meinerzhagen (DE)
(74) Vertreter: Rupprecht, Klaus, Dipl.-Ing.

(56) Entgegenhaltungen:
- DE-A- 2 805 349
- DE-U- 8 112 651
- US-A- 4 657 334

## Beschreibung

Die Erfindung betrifft ein elektrisches Installationsgerät zur Unterputzmontage.

Bekannte elektrische Installationsgeräte heutiger Bauart besitzen überwiegend einen Gerätesockel, der einerseits den Klemmenträger mit den Anschlußklemmen für den elektrischen Anschluß des Installationsgerätes an das Leitungsnetz als auch andererseits ein in bestimmter Weise, nämlich als Schalter, Taster oder Steckdose, ausgebildetes Funktionsteil umfaßt. Hierbei bilden der Klemmenträger und das Funktionsteil eine bauliche Einheit, die nur als Ganzes handhabbar ist und bei einer Störung oder Beschädigung in einem der beiden Teile sowie auch bei einer gewünschten Änderung der jeweiligen Funktion des Installationsgerätes komplett ausgewechselt werden muß.

Lediglich die Bedienflächen bei Schaltern und Tastern bzw. die sogenannten Zentralscheiben bei Steckdosen bilden hierbei jeweils ein separates Bauteil, das mit dem Gerätesockel lösbar verbunden ist.

Aus der US-A1-2 805 349 ist ein elektrisches Installationsgerät für die versenkte Montage in einer Hohlwand bekannt, bei welchem ein Aufnahmeteil, das hinter der Abdeckwand angeordnet ist, eine Ausnehmung in der Wand durchgreift und frontseitig mit einem Abdeckteil abgedeckt wird, das mittels einer Buchse-Stift-Verbindung am Aufnahmeteil gehalten und kontaktiert ist.

Ein weiteres Problem für die einwandfreie Funktion der Installationsgeräte sowie für deren elektrische Sicherheit resultiert aus der Tastsache, daß häufig nach Montage der Installationsgeräte, z. B. in Neubauten, die Wände und Flächen, in denen die Installationsgeräte eingesetzt sind, anschließend tapeziert werden, wobei durch die Dicke der Tapete bedingt sich der für die Funktionssicherheit und die elektrische Sicherheit erforderliche definierte Abstand zwischen dem Gerätesockel und dem Bedienteil verändert und gegebenenfalls, insbesondere bei den heute üblichen aufsteckbaren Bedienteilen, die Gefahr in sich birgt, daß bei zu großer Dicke der Tapete die Halterung des Bedienteiles nicht mehr ausreichend gewährleistet ist, so daß dieses sich vom Gerätesockel lösen kann.

Ausgehend von diesem Stand der Technik ist es Aufgabe der Erfindung ein Installationsgerät der eingangs genannten Art zu schaffen, das einfach aufgebaut, vielseitig einsetzbar und kostengünstig herstellbar ist und gleichzeitig die Möglichkeit bietet, unter Einhaltung der erforderlichen elektrischen Sicherheit durch Wandbeläge verursachte Abstandsänderungen der zuvor geschilderten Art auszugleichen.

Diese Aufgabe wird durch die Merkmale des Anspruchs 1 gelöst.

Die zusätzliche Stiftverbindung, die ein unbeabsichtigtes Abziehen des Funktionsteils vom Klemmenträger verhindern soll, ist derart ausgestaltet, daß ein am Funktionsteil angeformter Stift, z. B. ein angegossener Kunststoffzapfen oder ein eingesetzter Metallzapfen, in einer Buchse mit ausreichend enger Passung geführt ist, die am Gegenstück angeordnet ist, so daß die einander zugewandten Grenzflächen des Zapfens und der Buchse ausreichend große Reibkräfte verursachen, die einer Mindestabzugskraft entgegenwirken.

In Verbesserung dieser Befestigungsmöglichkeit kann vorgesehen sein, die enggepaßte Buchse mit Längsschlitzen zu versehen und hierbei die Federwirkung des Buchsenmaterials, vorzugsweise Kunststoff, auzunutzen.

Um sicherzustellen, daß auch bei dickeren Wandbelägen bzw. mehreren Tapetenlagen die Haltewirkung der Steckverbinder bzw. der Stifte ausreichend ist, um das unbeabsichtigte Entfernen des Funktionsteils vom Klemmenträger zu verhindern, ist die Länge der Steckverbinder sowie der Stifte so bemessen, daß eine ausreichend große Haltekraft resultiert. Zu diesem Zweck ist vorgesehen, daß die Länge der Steckverbinder bzw. Stifte wenigstens ein Drittel der Dicke bzw. Tiefe des Klemmenträgers aufweist. Hierdurch ist gewährleistet, daß die einander berührenden Flächen von Steckverbindern und Stiften mit den zugehörigen Gegenstücken das erforderliche Mindestmaß nicht unterschreiten.

Zur Erhöhung der Haltekraft kann ferner vorgesehen sein, die Oberflächen der Stifte aufzurauhen oder mit einer Riffelung zu versehen, welche ähnlich wie Widerhaken mit dem zugeordneten Gegenstück, den bereits erwähnten Buchsen, verzahnt.

In zweckmäßiger Ausgestaltung der Erfindung ist ferner vorgesehen, den Tragring mittels einer umgebördelten Gewindehülse mit dem Klemmenträger unlösbar zu verbinden, wobei die Gewindehülsen gleichzeitig zur Aufnahme von Befestigungsschrauben für die Spreize dienen.

Diese und weitere vorteilhafte Ausgestaltungen der Erfindung sowie Verbesserungen der Erfindung sind in den Unteransprüchen gekennzeichnet.

Anhand eines Ausführungsbeispieles sollen die besonderen Vorteile, vorteilhafte Ausgestaltungen und Verbesserungen der Erfindung näher erläutert und beschrieben werden.

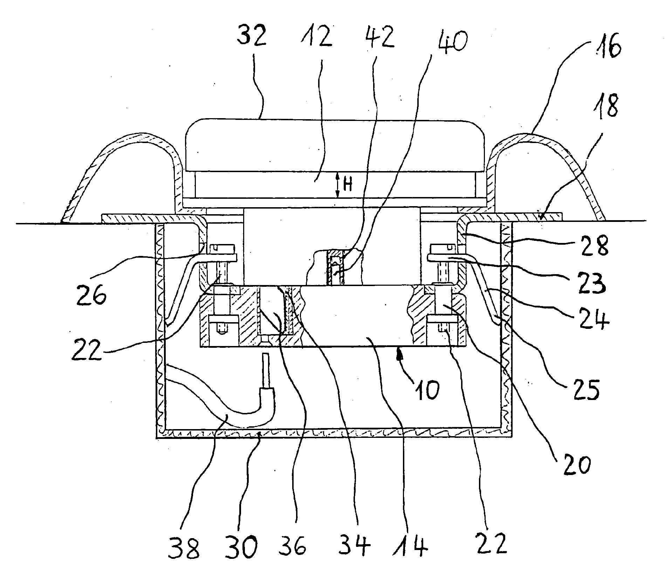

Die einzige Figur zeigt einen Längsschnitt durch ein erfindungsgemäßes elektrisches Installationsgerät.

Ein elektrisches Installationsgerät 10 besitzt ein Funktionsteil 12 und einen Klemmenträger 14 sowie einen zwischen den Klemmenträger 14 und das Funktionsteil 12 zwischenfügten Rahmen 16. Zum Klemmenträger 14 gehörig und mit diesem unlösbar verbunden ist ein Tragring 18. Ferner weist der Klemmenträger 14 diametral gegenüberliegend angeordnete Gewindehülsen 20 auf, welche hierfür vorgesehene Ausnehmungen im Klemmenträger 14 sowie im Tragring 18 durchgreifen und jeweils an einem Ende zwecks dauerhafter Verbindung des Tragrings 18 mit dem Klemmenträger 14 umgebördelt sind.

Außer zur Fixierung des Tragrings 18 am Klemmenträger 14 dienen die Gewindehülsen 20 auch zur Aufnahme jeweils einer Befestigungsschraube 22, welche mit Spreizen 24 zusammenarbeiten. Die im Stand der Technik seit langem zur Befestigung von Installationsgeräten bekannten Spreize 24 sind abgewinkelte Blechstanzteile, die jeweils durch hierfür vorgesehene Ausnehmungen 26 in Haltearmen 28 des Tragrings 18 durchgreifen und deren dem Klemmenträger 14 zugewandtes kürzeres Ende eine hier nicht näher gezeigte Ausnehmung aufweisen, durch welche die Befestigungsschraube 22 greift. Das von dem Klemmenträger 14 abgewandte längere Ende der Spreize 24 wird mit eindrehender Befestigungsschraube 22 in die Gewindehülse 20 nach außen gespreizt, da sich die Spreize 24 am Rand der Ausnehmung 26 abstützen. Hierdurch gelangen die Spreize in Eingriff mit einer hier ebenfalls im Längsschnitt gezeigten Unterputz-Einbaudose 30 und sorgen so für eine dauerhafte Verankerung des Installationsgerätes 10.

Das Funktionsteil 12 besitzt eine Bedienfläche 32 sowie Steckverbinder 34, die im dargestellten Beispiel als Flachstecker ausgebildet sind und zur elektrischen Verbindung des Funktionsteils 12 dienen. Hierzu greifen die Steckverbinder 34 in entsprechende Ausnehmungen der elektrischen Anschlußklemmen 36 des Klemmenträgers 14 ein. Diese Anschlußklemmen 36 dienen zur Verbindung mit externen Leitern 38, die die elektrische Stromversorgung sicherstellen und sind im gezeigten Beispiel als Federklammern ausgebildet.

Des weiteren besitzt das Funktionsteil 12 wenigstens eine Zapfen-Buchse-Verbindung, mittels welcher die zur Befestigung des Funktionsteils 12 am Klemmenträger 14 erforderliche Haltekraft realisiert werden kann. Hierzu sind die Abmessungen des Zapfens 40 und der zugeordneten Buchse 42 derart aufeinander abgestimmt, daß aufgrund der hierdurch bedingten Reibung die Haltekraft resultiert. Dabei ist darauf geachtet, daß die Überlappungslänge von Zapfen 40 und Buchse 42 ausreichend groß ist, so daß auch bei nicht paßgenauer Anlage des Funktionsteils 12 am Klemmenträger 14, z. B. bei mehrlagigen Tapeten oder dicken Wandbelägen, sowohl eine ausreichende elektrische Kontaktierung gewährleistet ist als auch eine ausreichende Haltekraft.

Die Montage des erfindungsgemäßen Installationsgerätes erfolgt wie nachstehend beschrieben.

Das Installationsgerät 10 wird in eine hierfür vorgesehene Unterputzeinbaudose 30 eingeführt, die in eine zuvor in die betreffende Wand eingebrachte Ausnehmung eingesetzt worden ist. In diesem Stadium der Montage ist das Funktionsteil 12 vom Klemmenträger 14 abgenommen, so daß die Befestigungsschrauben 22 frei zugänglich sind. Der Tragring 18 legt sich hierbei außerhalb der Ausnehmung an die Wand an, während durch Eindrehen der Befestigungsschrauben 22 die Spreize 24 an der Innenwand der Einbaudose festkrallen und so den Klemmenträger 14 in der Einbaudose 30 fixieren. Die externen Anschlußleiter 38 wurden zuvor bereits in die Anschlußklemmen 36 eingeführt um die elektrische Verbindung mit dem Versorgungsnetz zu sichern.

Nun kann das Funktionsteil 12 an den Klemmenträger 14 angesetzt werden, wobei jedoch zuvor der Rahmen 16, der das Funktionsteil außerhalb der Ausnehmung umgreift, an den Tragring anzusetzen ist, wo er durch das Funktionsteil 12 fixiert wird.

Im vorliegenden Fall handelt es sich um einen Taster, mit einem definierten Schalthub H. Dieser Schalthub H ist unabhängig vom Abstand des Funktionsteils 12 zum Klemmenträger 14 und bleibt daher stets konstant.

## Patentansprüche

1. Elektrisches Installationsgerät zur Unterputzmontage, wie Schalter, Taster, Steckdose, mit einem Klemmenträger (14) mit Anschlußklemmen (36) für externe Leiter (38) und mit Spreizen (24) für die Unterputzbefestigung, der mit einem Tragring (18) verbunden ist, ferner mit einem Funktionsteil (12) zur Aufnahme der für die vorgesehene Verwendung des Installationsgerätes erforderlichen Bauteile sowie mit einem Rahmen, der zwischen das Funktionsteil und den Tragring zwischengefügt ist und mit einem Bedienteil (32), wobei das Funktionsteil (12) auswechselbar ist und mittels elektrischer Steckverbinder (34) mit dem Klemmenträger (14) lösbar elektrisch und mechanisch verbunden ist und daß das Bedienteil (32) in das Funktionsteil (12) integriert ist und wenigstens eine zusätzliche kraftschlüssige Zapfen-Buchse-Verbindung (40, 42) vorgesehen ist, mittels welcher das Funktionsteil (12) am Klemmenträger (14) gehalten ist sowie darauf geachtet ist, daß die Überlappungslänge von Zapfen (40) und Buchse (42) ausreichend groß ist, so daß auch bei nicht paßgenauer Anlage des Funktionsteils (12) am Klemmenträger (14), z. B. bei mehrlagigen Tapeten oder dicken Wandbelägen, sowohl eine ausreichende elektrische Kontaktierung gewährleistet ist als auch eine ausreichende Haltekraft.

2. Elektrisches Installationsgerät nach Anspruch 1, dadurch gekennzeichnet, daß die Länge der Steckverbinder (34) und der Stiftverbindung (40, 42) wenigstens ein Drittel der Dicke des Klemmenträgers (14) beträgt.

3. Elektrisches Installationsgerät nach einem der vorherigen Ansprüche, dadurch gekennzeichnet, daß das Funktionsteil (12) als Schalter, Taster oder als Steckdose ausgebildet ist.

4. Elektrisches Installationsgerät nach einem der vorherigen Ansprüche, dadurch gekennzeichnet, daß die Steckverbinder (34) am Funktionsteil (12) angeordnet sind und in entsprechende Ausnehmungen im Klemmenträger greifen, die mit den Anschlußklemmen (36) verbunden sind.

5. Elektrisches Installationsgerät nach einem der vorherigen Ansprüche, dadurch gekennzeichnet, daß die Stifte (40) als Zapfen einstückig mit dem Klemmenträger (14) verbunden sind und in Buchsen (42) einführbar sind, die im Funktionsteil (12) vorgesehen sind.

6. Elektrisches Installationsgerät nach Anspruch 4, dadurch gekennzeichnet, daß die Steckverbinder (34) als Flachstecker ausgebildet sind.

7. Elektrisches Installationsgerät nach Anspruch 4, dadurch gekennzeichnet, daß die Steckverbinder (34) als Rundstecker ausgebildet sind.

8. Elektrisches Installationsgerät nach Anspruch 5, dadurch gekennzeichnet, daß die Halteflächen der Stifte (40) aufgerauht sind, zur Erhöhung der Haltekraft in den Buchsen (42).

9. Elektrisches Installationsgerät nach Anspruch 5, dadurch gekennzeichnet, daß die Halteflächen der Stifte (40) eine Riffelung aufweisen zur Erhöhung der Haltekraft in den Buchsen.

10. Elektrisches Installationsgerät nach Anspruch 5, dadurch gekennzeichnet, daß die Verbindung des Funktionsteils (12) mit dem Klemmenträger (14) mittels verrastbarer Stifte vorgesehen ist.

11. Elektrisches Installationsgerät nach einem der vorherigen Ansprüche, dadurch gekennzeichnet, daß die Anschlußklemmen (36) als Federklemmen ausgebildet sind.

12. Elektrisches Installationsgerät nach einem der Ansprüche 1 bis 11, dadurch gekennzeichnet, daß die Anschlußklemmen (36) als Schraubklemmen ausgebildet sind.

## Claims

1. Electrical installation device for flush mounting, such as switch, push-button switch, socket, having a terminal support (14) with connecting terminals (36) for external conductors (38) and with expanders (24) for flush-mounted fastening, which is connected to a support ring (18), furthermore having a function part (12) for accommodating the components required for the intended use of the installation device and having a frame which is inserted between the function part and the support ring and having an operating part (32), the function part (12) being replaceable and connected electrically and mechanically in a releasable manner to the terminal support (14) by means of electrical plug connectors (34) and the operating part (32) being integrated into the function part (12) and at least one additional non-positive peg-bush connection (40, 42) being provided, by means of which the function part (12) is held on the terminal support (14) and it being ensured that the overlapping length of peg (40) and bush (42) is sufficiently large so that both sufficient electrical contact is ensured as well as a sufficient holding force even if the function part (12) does not bear on the terminal support (14) in an accurately fitting manner, e.g. in the case of multi-layer wallpapers or thick wall coatings.

2. Electrical installation device according to Claim 1, characterized in that the length of the plug connectors (34) and of the pin connection (40, 42) amounts to at least one third of the thickness of the terminal support (14).

3. Electrical installation device according to one of the preceding claims, characterized in that the function part (12) is constructed as switch, push-button switch, or as socket.

4. Electrical installation device according to one of the preceding claims, characterized in that the plug connectors (34) are arranged on the function part (12) and engage in corresponding recesses in the terminal support which are connected to the connecting terminals (36).

5. Electrical installation device according to one of the preceding claims, characterized in that the pins (40) are integrally connected as pegs to the terminal support (14) and can be inserted into bushes (42) which are provided in the function part (12).

6. Electrical installation device according to Claim 4, characterized in that the plug connectors (34) are designed as spade connectors.

7. Electrical installation device according to Claim 4, characterized in that the plug connectors (34) are designed as round connectors.

8. Electrical installation device according to Claim 5, characterized in that the holding surfaces of the pins (40) are roughened to increase the holding force in the bushes (42).

9. Electrical installation device according to Claim 5, characterized in that the holding surfaces of the pins (40) are furrowed for increasing the holding force in the bushes.

10. Electrical installation device according to Claim 5, characterized in that the function part (12) is connected to the terminal support (14) by means of lockable pins.

11. Electrical installation device according to one of the preceding claims, characterized in that the connecting terminals (36) are constructed as spring terminals.

12. Electrical installation device according to one of Claims 1 to 11, characterized in that the connecting terminals (36) are constructed as screw terminals.

## Revendications

1. Appareil électrique d'installation encastrable, tel qu'un commutateur, un bouton poussoir, une prise, comportant un support (14) de bornes avec des bornes de connexion (36) pour des conducteurs (38) extérieurs et des griffes (24) pour la fixation dans des boîtes d'encastrement qui est lié à un anneau de support (18), une partie fonctionnelle (12) qui reçoit les organes nécessaires pour l'application prévue de l'appareil d'installation, un cadre placé entre la partie fonctionnelle et l'anneau support et une partie de commande (32), dans lequel la partie fonctionnelle (12) peut être échangée et est liée électriquement et mécaniquement, avec possibilité de démontage, au support (14) de bornes par l'intermédiaire de connecteurs (34) électriques enfichables, dans lequel la partie de commande (32) est intégrée dans la partie fonctionnelle (12) et il est prévu au moins une liaison supplémentaire par force à broches et douilles (40, 42), liaison au moyen de laquelle la partie fonctionnelle (12) est tenue sur le support (14) de broches, et dans lequel la longueur de recouvrement entre broches (40) et douilles (42) est suffisamment importante pour assurer un contact électrique suffisant et une force de serrage suffisante lorsque la partie fonctionnelle (12) n'est pas parfaitement appliquée contre le support (14) de bornes, par exemple dans le cas de plusieurs couches de papier peint ou de revêtements muraux épais.

2. Appareil électrique d'installation selon la revendication 1, caractérisé par le fait que la longueur des connecteurs (34) enfichables et de la liaison par broches (40, 42) représente au moins un tiers de l'épaisseur du support (14) de bornes.

3. Appareil électrique d'installation selon l'une des revendications précédentes, caractérisé par le fait que la partie fonctionnelle (12) est agencée sous forme de commutateur, de bouton poussoir ou de prise.

4. Appareil électrique d'installation selon l'une des revendications précédentes, caractérisé par le fait que les connecteurs (34) enfichables sont disposés sur la partie fonctionnelle (12) et pénètrent dans des logements adaptés du support de bornes qui sont liés aux bornes de connexion (36).

5. Appareil électrique d'installation selon l'une des revendications précédentes, caractérisé par le fait que les broches (40) en forme de tiges forment un ensemble monobloc avec le support (14) de bornes et pénètrent dans des douilles (42) prévues dans la partie fonctionnelle (12).

6. Appareil électrique d'installation selon la revendication 4, caractérisé par le fait que les connecteurs (34) enfichables sont agencés sous forme de connecteurs plats.

7. Appareil électrique d'installation selon la revendication 4, caractérisé par le fait que les connecteurs (34) enfichables sont agencés sous forme de connecteurs ronds.

8. Appareil électrique d'installation selon la revendication 5, caractérisé par le fait que les surfaces de retenue des broches (40) sont rugueuses aux fins d'augmenter la force d'adhérence dans les douilles (42).

9. Appareil électrique d'installation selon la revendication 5, caractérisé par le fait que les surfaces de retenue des broches (40) présentent des stries aux fins d'augmenter la force d'adhérence dans les douilles (42).

10. Appareil électrique d'installation selon la revendication 5, caractérisé par le fait que la liaison entre la partie fonctionnelle (12) et le support (14) de broches est prévue au moyen de broches enfichables.

11. Appareil électrique d'installation selon l'une des revendications précédentes, caractérisé par le fait que les bornes de connexion (36) sont agencées sous forme de bornes à ressort.

12. Appareil électrique d'installation selon l'une des revendications précédentes, caractérisé par le fait que les bornes de connexion (36) sont agencées sous forme de bornes à vis.
